# EUROPEAN PATENT APPLICATION

(11) **EP 2 693 349 A1**
(43) Date of publication of application: **05.02.2014**
(21) Application number: 13160696.4
(22) Date of filing: 22.03.2013
(51) Int. Cl.: G06F 17/30

(54) **A system and method for massive call data storage and retrieval**

(30) Priority: 03.08.2012 IN MU22432012
(71) Applicant: Tata Consultancy Services Limited, 400021 Mumbay (IN)
(72) Inventor: Basak, Debarash, Mumbai 400093, Maharashtra (IN); Dani, Jayant Sudhakarrao, Mumbai 400093, Maharashtra (IN); Mehra, Vanshish, Mumbai 400093, Maharashtra (IN); Mukramuddin, Mohammed Ahmed, Hyderabad 500 081, Andhra Pradesh (IN)
(74) Representative: Brann AB

(57) **Abstract**

A system and method for processing data in a big data storage system (108) has been described, wherein the data is being pulled, transformed and loaded from a singular or a plurality of source systems (106) to a big data storage system (108). Further, a query engine (110) is configured to execute one or more query in a real-time for retrieving the data from the target big data storage system and a processor (112) maps the executed query with the data thus stored by generating a key value in a preset format with respect to each query, such that the query results are retrieved by scanning the target big data storage system in accordance with the key value thus formed.

## Description

### FIELD OF INVENTION

The present subject matter described herein relates to a system and method for storing and retrieving large datasets, and more particularly, relates to a system and method for processing large amount of data in order to facilitate retrieval of query results in an agile and efficient manner from big data storage system.

### BACKGROUND

Currently, Hadoop, an open source software framework that supports data-intensive distributed applications (generic processing framework) is widely used for executing queries and processing massive datasets, wherein the data may be loaded in Hadoop Distributed File System (HDFS).

Hadoop functions on massive datasets by horizontally scaling (scale-out) the processing across large number of servers through MapReduce framework. Using MapReduce, Hadoop splits up a query, sends the sub-query to different servers and lets each server solve its sub-query in parallel. Hadoop then combines all the sub-query solutions together and gives out the solution into files which are used as inputs for additional MapReduce steps. Scale out storage platform increases performance, capacity by adding resources which includes processors, memory, host interface.

Hadoop systems are used in several industries where large datasets are to be stored which includes internet archives, telecommunication industry, etc., where millions of records are added everyday to the data storage system. In a telecommunication industry, call detail record (CDR) is stored for billing, customer behavior, network traffic, etc

Current tracking and monitoring system for the CDR gives result for the time range of several weeks. Data for only a year is kept in the tracking system and at most few months (approximately 3 months) of data is analyzed. Data which is one year old is flushed out from the system. Problems associated with this approach is that data analyzing window is relatively small and user's usage pattern for cell id and switch id cannot be analyzed.

Therefore, there is need for a data model (system) which can store large datasets, capable of responding to query in less time and return data for a larger time range.

### OBJECTS OF THE INVENTION

It is the primary object of the invention to provide a system for processing data in a big data storage system.

It is another object of the invention to load the data from one or more source system and push the data after performing one or more transformation operation in order to populate one or more target big data storage system.

It is yet another object of the present invention to provide a query engine configured to execute one or more query in a real-time for retrieving the data from the big data storage system.

It is yet another object of the invention to provide a system for generating a key value with respect to a particular query for quick retrieval of query result by using a mapping of map methodology.

### SUMMARY OF THE INVENTION:

This summary is provided to introduce concepts related to a system and method for processing data in a big data storage system. This summary is not intended to identify essential features of the claimed subject matter nor is it intended for use in determining or limiting the scope of the claimed subject matter.

One of the preferred embodiments of the present subject matter is a system comprising a user interface configured to provide to one or more user, an access to the distributed database in a network and a loading engine configured to pull the data from one or more source system and push the data in order to populate one or more target big data storage system. The system further comprises a query engine configured to execute one or more query in a real-time for retrieving the data from the target big data storage system and a processor to map the executed query with the data thus stored. The processor further comprises a generating module to form a key value in a preset format with respect to a particular query, in order to map the query, the key value being stored in the respective target big data storage system such that the query results are retrieved by scanning the target big data storage system in accordance with the key value thus formed.

Another embodiment of the present subject matter provides a method for processing data in a big data storage system. The method comprises steps of providing to one or more user, an access to the big data storage system in a network and loading the data from one or more source system in order to populate one or more target big data storage system. The method further comprises executing one or more query in real-time for retrieving the data from the target big data storage system and processing the query by mapping it with the data thus stored. The processing further comprises forming a key value in a preset format with respect to a particular query, in order to map the query, the key value is stored in the respective target big data storage system such that the query results are retrieved by scanning the target big data storage system in accordance with the key value thus formed.

### BRIEF DESCRIPTION OF DRAWINGS

Further objects, embodiments, features and advantages of the present invention will become more apparent and may be better understood when read together with the detailed description and the accompanied drawings. The components of the figures are not necessarily to scales, emphasis instead being placed on better illustration of the underlying principle of the subject matter. Different numeral references on figures designate corresponding elements throughout different views. However, the manner in which the above depicted features, aspects, and advantages of the present subject matter are accomplished, does not limit the scope of the subject matter, for the subject matter may admit to other equally effective embodiments.
Figure 1 illustrates the system architecture for processing data in a big data storage system in accordance with an embodiment of the system.
Figure 2 illustrates the generation of key value with respect to a query in accordance with an alternate embodiment of the system.
Figure 3 illustrates the generation of a key value and fetching the data from the master
table in accordance with an alternate embodiment of the system.
Figure 4 illustrates the process of loading and transforming data from a source system to a target big data storage system in accordance with an embodiment of the system.
Figure 5 illustrates the execution of a query and retrieving its results by using mapping of the map methodology in accordance with an exemplary embodiment of the invention.

### DETAILED DESCRIPTION OF THE INVENTION:

Some embodiments of this invention, illustrating its features, will now be discussed:
The words "comprising", "having", "containing", and "including", and other forms thereof, are intended to be equivalent in meaning and be open ended in that an item or
items following any one of these words is not meant to be an exhaustive listing of such item or items, or meant to be limited to only the listed item or items.

It must also be noted that as used herein and in the appended claims, the singular forms "a", "an", and "the" include plural references unless the context clearly dictates otherwise. Although any systems, methods, apparatuses, and devices similar or equivalent to those described herein can be used in the practice or testing of embodiments of the present invention, the preferred, systems and parts are now described. In the following description for the purpose of explanation and understanding reference has been made to numerous embodiments for which the intent is not to limit the scope of the invention.

One or more components of the invention are described as module for the understanding of the specification. For example, a module may include self-contained component in a hardware circuit comprising logical gate, semiconductor device, integrated circuits or any other discrete component. The module may also be a part of any software programme executed by any hardware entity for example processor. The implementation of module as a software programme may include a set of logical instructions to be executed by the processor or any other hardware entity. Further a module may be incorporated with the set of instructions or a programme by means of an interface.

The disclosed embodiments are merely exemplary of the invention, which may be embodied in various forms.

The present invention relates to a system and method for processing data in a big data storage system. The system proposes a solution for storing the data in a manner, such that the response time for querying the data from the big data storage system becomes minimal. The overall invention could be performed in two steps i.e.(a) loading data in the big data storage system and then retrieving query results by using a methodology herein defined as (b) Mapping of the map. In the first step, a user interface provides to one or more user an access to the big data storage system in a network. The data is loaded from one or more source system to populate one or more big data storage system. Queries are executed in real- time and are further processed to retrieve the data stored in the target big data storage system by using the mapping of the map methodology.

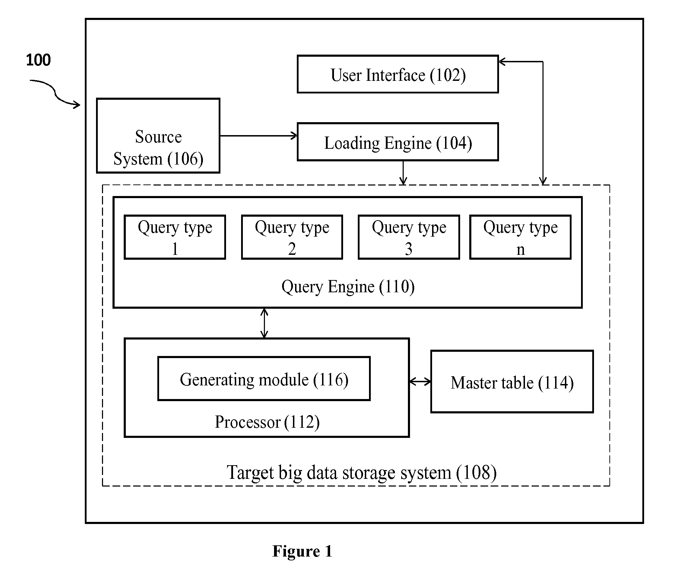

In accordance with an embodiment, referring to figure 1, the system (100) comprises a user interface (102) configured to provide to one or more user, an access to the big data storage system in a network, a loading engine (104) which is configured to pull the data from one or more source system (106) and push the data in order to populate one or more target big data storage system (108), a query engine (110) configured to execute one or more query in a real-time and a processor (112) to map the executed query with the stored data by generating one or more key values for a particular query.

Still referring to figure 1, the user interface (102) is configured to provide the access to at least one user for the Big Data storage system (108) in the network.

The system (100) further comprises the loading engine (104) configured to pull the data from one or more source system (106) and push the data in order to populate one or more target big data storage system (108). The loading engine (104) pushes the data in batches. The data pushed by the loading engine (104) is transformed and is stored in a master table (114). This master table stores the original data. The system designs the big data storage system (108) in a manner such that it is provided with a query layer (not shown in figure), wherein the query engine (110) is used for executing one or more queries (query type1, query type 2....... Query type n).

In general, while querying the big data storage system (108) like HBase, scanning of more than billion of items is to be done which increases the response time of a query. For that, the invention has proposed the mapping of the map methodology which will reduce the query retrieval time.

The processor (112) in communication with the loading engine (104) then processes the data with respect to the query executed by the user for retrieving the results.

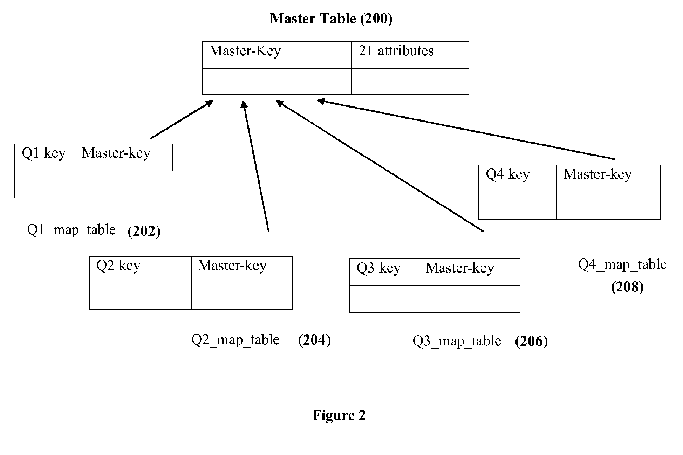

Referring to figure 1 and 2, below the query engine (110), the processor (112) is provided with the generating module (116) configured to prepare a key value for each query.

The master table (200) stores the original data. The further tables are created for the particular type of query (Q1_map_table (202), Q2_map_table (204) etc). For each query type, the generation module (116) generates a key value (Q1key, Q2 key etc). In the method of mapping of the map, when the query is executed, based on the key value, the data from the respective tables (202, 202 etc) is mapped to the master table (200) for retrieving the results.

For each query, rather than scanning the entire big data storage system (108), the key value (prepared for the particular type of query data) fetches the results from the master table for the executed query in a much lesser time. The key value further comprises a start key and a stop key coupled with a time range. This process of obtaining query results by scanning a particular portion of big data storage system (108) by using the related key value is claimed to be the mapping of the map.

Since the system (100) is further horizontally scalable (because of the transformation thus performed), it implies that the storage will not be a constraint which in turn makes the system (100) more effective in analyzing the data.

The proposed system (100) and method is broadly divided into two major steps i.e. loading of data by means of the loading engine (104) and mapping of the map methodology. This combination may be used in so many fields for retrieving query results from the big data storage system like querying data for train enquiries, querying data for PAN (Permanent Account Number) related enquiries etc.

The proposed invention could be explained by considering its implementation in a CDR (Call Data Recording) tracking and monitoring system for vigilance. The use case is for the purpose of understanding and is not limiting the application of the proposed invention.

Here, the source system comprises a CDR system and the target big data storage system comprises an HBase.

In accordance with an embodiment, the method is divided into two major steps:

### (A) LOADING OF THE DATA:

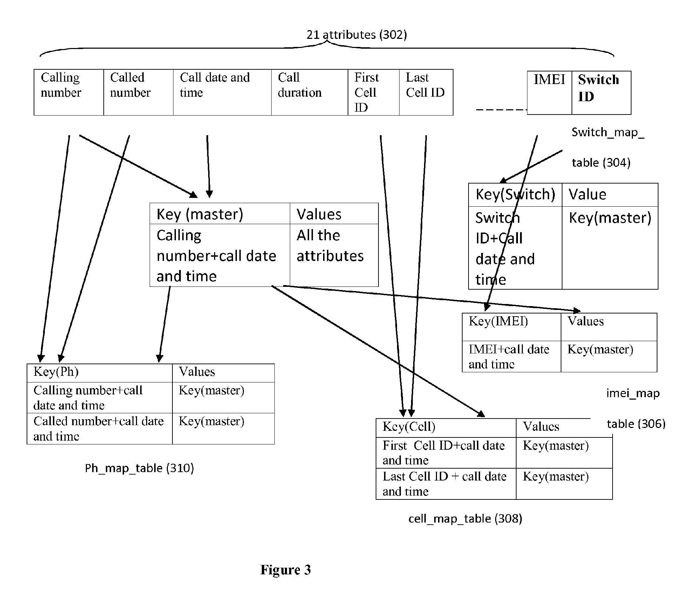

Referring to figure 3, Generic CDR has primarily 21 default attributes (as shown in 302) associated with it. They are listed as follows:
1. CALLING_NUMBER - Describes the number that initiates the call. Belongs to the service provider's network
2. CALLED_NUMBER - The number which was called. May or may not belong to the service provider's network
3. CALL_DATE_TIME - date and time in seconds when the call was initiated
4. CALL_DURATION- Duration of the call
5. DIRECTION- IN/OUT, basically describes whether the call is incoming or outgoing.
6. SWITCH_ID - The network switch id
7. IN_TG - Incoming trunk group
8. OUT_TG -Outgoing trunk group
9. IMEI/ESN- International mobile entity identification/Entity Serial Number
10. IMSI- The sim card number
11. FIRST_CELL_ID - The cell id where the call started
12. LAST_CELL_ID- The cell id where the call ended
13. ROAMING_INDICATOR - Yes/ no, determines whether the calling number is roaming or not.
14. SUB_CIRCLE - Subscriber's circle
15. ROAMING CIRCLE- Determines the circle within which the user has activated roaming
16. RECORD_TYPE - can be SMS/DATA/VOICE
17. DIALLED_NUMBER - Number which is dialled in
18. SMSC_CENTRE_NUMBER- SMS centre for the subscriber
19. and three reserved fields.

As per the system (100) architecture illustrated in figure 1, the loading engine (104) pushes the data from the CDR system (herein source system (106)) and populates the HBase. At the time of loading, the data is transformed. These transformations are performed for improving the performance of the system (100). After loading, the data is processed by the processor (112) for retrieving the query results. The loading engine (104) and the processor (112) are in communication with each other. The original data with respect to these 21 attributes (302) is stored in the master table (304). For which the key (value) is generated by the generating module (116) which is combination of calling number, call date and time (or any other combination of query attributes with time) which is further mapped with the master table.

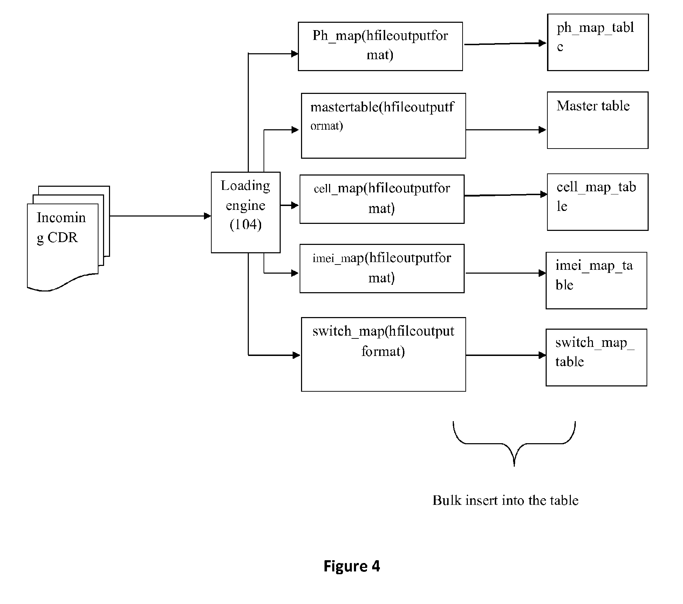

Referring to figure 4, the loading engine (104) may further create output in hfile format for faster loading of the data into the HBase. The loading engine (106) may be implemented using the Hadoop's mapreduce framework (not shown in figure) by using the classes for Hfile provided by HBase. For example, for all the customized queries out of these 21 attributes, the hfile is created for ph_map, master table, cell_map, imei_map, switch_map etc. The data is further stored in the respective master file (ph_map_table, switch_map_table etc).

It is however important to mention here that a person skilled in the art would understand that the above mentioned exemplary embodiments will no manner restrict or limit the scope of the invention.

The user interface (102) provides an access of the Hbase to a user. The user may invoke a query by using the query engine (110). The query may include any combination of the 21 attributes (202) from the above mentioned attributes set or a combination of the above mentioned attributes with external attributes. In a typical exemplary embodiment, a query may comprise the following attributes from the above mentioned attributes set, being depicted as:
a. Caller Phone number
b. Called Phone Number
c. Handset/instrument Unique identification no.(IMEI)
d. Relay Towers of Telephone-company.
e. Cellular network switch of Telephone-company.
f. a combination thereof.

For all the above domains, Start and End time ranges may be used to restrict the search boundary.

There may be below listed scenarios one or more user would like to track the CDR's:
- Based on a given time range, a user would like to track all the incoming and outgoing calls made from a given phone number. It can also include but is not limited to a list of phone numbers
- Based on a given time range, a user would like to track the CDRs for a given IMEI number. It can also include but is not limited to a list of IMEI numbers
- Based on a given time range, the user would also like to track all the call made to a given cell tower. It can also include but is not limited to a list of cell tower identification numbers.
- Based on a given time range and switch ID, the user would like to track all the call that traversed via the given switch. It can also include but is not limited to a list of switch ID.

However it is important to mention here that the above mentioned scenarios are mere exemplary embodiments and are no manner limited the scope of the present subject matter.

### (B) MAPPING OF THE MAP METHODOLOGY:

Still referring to figure 3, as per the above listed query scenarios, for each query executed by the query engine (110) the data from CDR is stored in the corresponding master table like, switch_map_table (304), imei_map_table (306), cell_map_table (308) and ph_map_table (310). The data is processed by the processor (112). All these tables store the related key value which is generated by the generation module (116). For switch_map_table (304), the key value is a combination of switch ID, call date and time. For imei_map_table (306), the key value is a combination of IMEI, call date and time. For cell_map_table (308), the key value is a combination of first cell ID, call date and time or last cell ID, call date and time. For ph_map_table (310), the key value is a combination of calling number, call date and time or called number, call date and time.

Based on these query types, when the query is executed by the user, the key value from the corresponding table is mapped with the master table (302) rather than scanning the entire target big data storage system (108) for retrieving the results.

In the abovementioned attribute set, the IMEI may also be referred as ESN. We mention here that the aforementioned attributes set of CDR is a mere example and does not limit the scope of the subject matter herein.

The system (100) is quick in key based retrieval. The system (100) can quickly jump on these key ranges and scan for retrieving for the query thus executed. The data for a key value is fetched from the master table stored in the big data storage system.

### WORKING EXAMPLE OF THE PRESENT SUBJECT MATTER

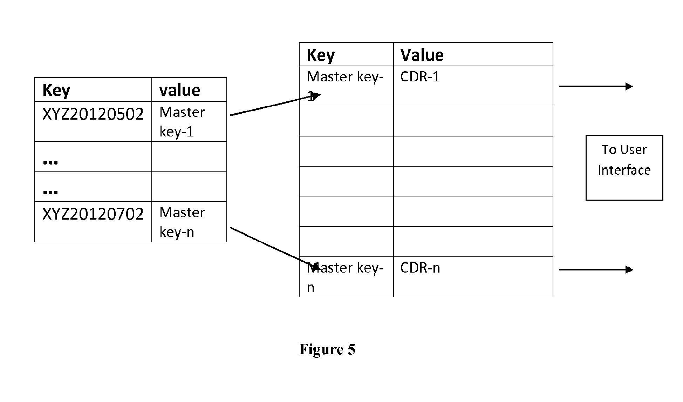

The system and method illustrated to facilitate processing of data in Big Data storage system may be illustrated by working example stated in the following paragraph; the process is not restricted to the said example only:
Referring to fig.5, let us consider that the keys generated by the generating module (116) are lexi-logically stored in a sorted manner. Thus for ph_map_table, similar phone numbers whether they are calling or called lie together. Similarly, if we consider cell_map_table, cell ids lie together irrespective of whether they are first cell id or last cell id. All these keys are distinguished using the call date time that is appended with them.

Thus for finding all the incoming calls for phone number XYZ from 2012-05-02 to 2012-07-02, we just have to scan the table ph_map_table from start key as XYZ20120502 and end key as XYZ20120702. This partial key based scan will fetch the values consisting of the key referencing the CDR data. We call this process as mapping of the map. So basically mapping of the map consists of two processes:
1. Scan respective tables using the partial key comprising ph key or the imei key or cell key or switch key and time range appended as start key and stop key.
2. Getting the value based on the master keys obtained from the above step.

Thus one can track CDRs for not just 1 week but even can track for 3 months in same or even lesser time. Secondly, the proposed system is horizontally scalable implies storage will not be a constraint which in turn implies lots of data to analyze.

The present subject matter, therefore, provides a system and method for processing large amount of data in order to facilitate retrieval of query results in an agile and efficient manner in the Big Data storage. It is to mention at this juncture that although the present subject matter has been described in detail; those skilled in the art should understand that they can make various changes, substitutions and alteration herein, without departing from the crux of the subject matter in its broadest form.

## Claims

1. A system for processing data in a big data storage system (108), the system comprising:
a user interface (102) configured to provide to one or more users, an access to the big data storage system in a network;
a loading engine (104) configured to pull the data from one or more source systems (106) and to push the data in order to populate one or more target big data storage systems (108);
a query engine (110) configured to execute one or more queries in a real-time for retrieving the data from the target big data storage system; and
a processor (112) to map the executed query with the data thus stored, the processor further comprising;
a generating module (116) configured to form a key value in a preset format with respect to a particular query, in order to map the query, the key value being stored in the respective target big data storage system;
such that the query results are retrieved by scanning the target big data storage system in accordance with the key value thus formed.

2. The system as claimed in claim 1, wherein the loading engine further comprises a transformation module to transform the fetched data from one format into other.

3. The system as claimed in claim 1, wherein the loading engine fetches the data in batches.

4. The system as claimed in claim 1, wherein the key value fetches data from a master table (114) storing one or more attributes of the data.

5. The system as claimed in claim 1, wherein the big data storage system may include but is not limited to an HBase.

6. The system as claimed in claim 1, wherein the source system may include but is not limited to a CDR (Call Data Record) database.

7. The system as claimed in claim 1, wherein the query may include but is not limited to the query related to a phone query, an IMEI query, a cell query, a switch query or a combination thereof.

8. The system as claimed in claim 1, wherein the key value is formed by combining details of a call with a time range.

9. A method for processing data in a big data storage system, the method comprising steps of:
providing to one or more users, an access to the big data storage system (108) in a network;
loading the data from one or more source systems (106) in order to populate one or more target big data storage systems (108);
executing one or more query in real-time for retrieving the data from the target big data storage system (108); and
processing the query by mapping it with the data thus stored, the processing further comprising steps of;
forming a key value in a preset format with respect to a particular query, in order to map the query, the key value is stored in the respective target big data storage system;
such that the query results are retrieved by scanning the target big data storage system in accordance with the key value thus formed.

10. The method as claimed in claim 9, wherein the loading of data further comprises transforming the data from one format into other.

11. The method as claimed in claim 9, wherein the data is loaded in batches.

12. The method as claimed in claim 9, wherein the query may include but is not limited to the query related to a phone query, an IMEI query, a cell query, a switch query or a combination thereof.

13. The method as claimed in claim 9, wherein the key value is formed by combining details of a call with a time range.
